# EUROPEAN PATENT SPECIFICATION

(11) **EP 1 224 701 B1**
(45) Date of publication and mention of the grant of the patent: **05.01.2005**
(21) Application number: 00966724.7
(22) Date of filing: 14.09.2000
(51) Int. Cl.: H01M 2/08

(54) **CURRENT COLLECTOR AND SEAL ASSEMBLY FOR ELECTROCHEMICAL CELL**
STROHMABNEHMER UND DICHTUNGSANORDNUNG FÜR ELEKTROCHEMISCHE ZELLE
COLLECTEUR DE COURANT ET DISPOSITIF D'ETANCHEITE POUR CELLULE ELECTROCHIMIQUE

(30) Priority: 14.09.1999 US 395696
(43) Date of publication of application: 24.07.2002
(73) Proprietor: Eveready Battery Company, Inc., Westlake, Ohio 44145 (US)
(72) Inventor: JANMEY, Robert, M., Olmsted Township, OH 44138 (US)
(74) Representative: Weber, Thomas, Dr.Dipl.-Chem.
(86) International application number: PCT/US2000/025202
(87) International publication number: WO 2001/020693

(56) References cited:
- WO-A-00/35031
- US-A- 3 740 271
- US-A- 5 667 912
- US-A- 5 776 631

## Description

The present invention generally relates to electrochemical cells and, more particularly, to a current collector and seal assembly for an electrochemical cell.

Alkaline electrochemical cells typically include a cylindrical steel can having a closed end, an open end, and side walls extending therebetween. The can contains electrochemically active materials which include a positive electrode, commonly referred to as the cathode, comprising manganese dioxide as the active material, and a negative electrode, commonly referred to as the anode, comprising zinc powder. Conventional cells often employ a bobbin-type construction in which the anode is centrally located and is surrounded by a tubularly shaped cathode which contacts the can walls. A separator is generally located between the anode, and cathode, and an alkaline electrolyte solution simultaneously contacts, the cathode, the anode, and the separator.

Conventional electrochemical cells have a conductive current collector, which is typically in the shape of an elongated brass nail, inserted into the anode active material, and a seal assembly which provides closure to the open end of the steel can. The current collector generally extends through an opening or aperture provided in the seal, and provides an electrical connection between the anode and an outer conductive cover which serves as the negative terminal.

The current collector, seal, and an inner metal cover are usually preassembled together, to form what is commonly referred to as a current collector and seal assembly. The seal has a centrally located opening through which the current collector protrudes, and a sealant is typically disposed between the current collector and the seal. The outer perimeter of the seal and the central portion of the seal which surrounds the centrally located opening are usually reinforced by a. thickening of the seal's material. Between the outer perimeter and central portion is a diaphragm which often has a thinned section for providing a stress concentration pressure release vent for allowing the seal to rupture when the cell's internal pressure exceeds a predetermined limit, to thereby vent high pressure gases from within the cell.

The reinforced central portion of the seal that surrounds and defines the centrally located opening is commonly referred to as the "hub". The current collector is inserted through the opening in the hub so that an interference fit exists between the seal hub and the collector. In some commercially available cells, the diameter of the collector nail is greater than the initial inside diameter of the opening, to create an interference fit so that electrolyte cannot escape from the cell along the surface of the collector. Often, the interference fit results in the creation of tangential tension which, if excessive, may exceed the seal hub's material strength and cause the seal to split and allow electrolyte solution to escape. On the other hand, if the interference fit is insufficient, electrolyte solution may escape between the collector and the seal.

A number of current collector and seal assemblies are known for maintaining a sealed closure between the seal and current collector. One approach is to use a plastic coated metallic sleeve located on the interior surface of the seal for compressing the plastic against the collector to prevent leakage of electrolyte.

Another approach is to use an inner metal cover, in which the collector is inserted through the seal's central opening so that the upstanding wall of the seal hub which surrounds the collector is forced outward against the inner metal cover: However, the current collector exerts tangential tension in the seal's upstanding wall forming the hub. Additionally, one commercially available battery has employed a flat metallic ring around the seal body so that the seal is compressed between the collector and ring as the collector is forced through the seal's central opening.

Therefore, many of the above assemblies result in the creation of tangential tension in the seal which, when the seal is exposed to potassium hydroxide (KOH), may result in stress corrosion cracking and thus may allow for electrolyte leakage. In an attempt to minimise the likelihood of stress corrosion cracking, prior approaches often require coating the seal with a protectant such as asphalt.

A more recent approach, as disclosed in US-A-5,422,201, is to use a compression means in the form of a tubularly shaped metallic component having one end flared radially outward. The metallic component is inserted around the upstanding wall forming the hub of the seal to compress a central opening formed in the hub. With the tubular metallic component in place, the current collector nail is driven upward through the compressed opening from the bottom side. In doing so, the compressed opening is forcibly increased in diameter by an amount that prevents the creation of tangential tension in the seal's hub, yet allows for compression of the hub against the current collector. The flared end of the tubular shaped metallic component creates a shear edge against the seal's vent.

US-A-5,667,912 discloses an alkaline electrochemical cell comprising a current collector and seal assembly comprising a tubularly shaped compression bushing contacting the outer periphery of the inner upstanding wall of the hub provided in the seal body and compressing the outstanding wall of the hub against the current collector, whereby, after insertion of the collector through the opening compressed by the bushing, radial and tangential compressive stresses are applied on the upstanding walls of the hub with no tangential tension being applied thereon.

US-A-3,740,271 discloses a cylindrical dry cell incorporating a metal container sheathed in plastic including a cover formed at one end of the sheath. The cover has substantially parallel groups formed therein for receiving the ends of the metal container and the ends of the other electrode terminal, holding said ends in a permanently spaced apart relationship.

While known current collector assemblies have been used for many years, there exists a need for an improved current collector and seal assembly that is easy to assemble, imparts little or no tangential tension in the seal's hub to avoid hub splitting, and provides sufficient radial compressive stress and tangential compressive stress on the seal's hub to prevent leakage of electrolyte between the collector and the seal. We have now found, surprisingly, that this may be achieved by providing a current collector and seal assembly that comprises a compression bushing as described herein.

Accordingly, in a first aspect, the present invention provides a current collector and seal assembly for sealing electrochemically active components within a container, the assembly comprising:
a resilient and electrically non-conductive seal body having a hub with an inner upstanding wall defining an opening therethrough;
a current collector inserted through the opening and adapted to contact electrochemically active components in an electrochemical cell; and
a compression bushing having an aperture formed through a central longitudinal axis and contacting an outer periphery of the inner upstanding wall of the hub and compressing the upstanding wall of the hub against the current collector, wherein the compression bushing is substantially symmetric about an axis perpendicular to the longitudinal axis.

In a second aspect, the present invention provides an electrochemical cell comprising a current collector and seal assembly as defined above.

In a third aspect, the present invention provides a process for assembling an electrochemical cell comprising the steps of:
providing a container having a closed bottom end, an open top end, and upstanding walls between the top and. bottom ends;
disposing electrochemically active materials including a positive electrode and a negative electrode in the container;
providing a seal body having an inner upstanding wall defining an opening having a first diameter provided therein;
assembling a compression bushing around an outer periphery of the inner upstanding wall of the seal and under compression so as to compress the upstanding wall to reduce the size of the opening to a second diameter, wherein the compression bushing has an aperture extending through a longitudinal axis of the cell and the compression bushing is substantially symmetric about an axis perpendicular to the longitudinal axis;
disposing a current collector through the opening formed in the upstanding wall so that the current collector causes the opening to increase in size from the second diameter to approximately the first diameter, thereby preventing the presence of tensile forces on the upstanding wall of the seal; and
assembling the seal and collector assembly in the open end of the container to close and seal the container.

An advantage of the present invention is that it improves the reliability and process assembly of the collector and seal assembly for use in an electrochemical cell. The collector and seal assembly includes a resilient and electrically non-conductive seal body having an upstanding wall defining an opening therethrough. A current collector is inserted through the opening and is adapted to contact electrochemically active material in a cell. A polymeric compression bushing contacts and compresses the upstanding wall of the seal. Accordingly, the collector and compression bushing preferably cooperate to exert radial compressive stress and tangential compressive stress on the upstanding wall of the seal after insertion of the current collector through the opening.

The collector and seal assembly of the present invention is assembled for use in an electrochemical cell. The electrochemical cell has a container generally including a closed bottom end, an open top end, and side walls extending between the top and bottom ends. Electrochemically active materials are disposed in the container, and generally include a positive electrode and a negative electrode. The collector and seal assembly is disposed in the open end of the container to seal closed the open end. The collector and seal assembly is easy to assemble and minimises tension in the seal to prevent stress corrosion cracking of the seal.

The cell is preferably a cylindrical cell, but it will be appreciated that other cell shapes may be used that employ a seal with a current collector inserted through it, for example a prismatic cell.

Preferably, the cell is an alkaline cell. Thus, in a preferred embodiment, the cell has an anode comprising zinc, a cathode comprising manganese dioxide, and an alkaline electrolyte, preferably potassium hydroxide (KOH) electrolyte. In a particularly preferred embodiment, the cathode is formed of a mixture of manganese dioxide, graphite, KOH solution, and additives, and the anode is formed of zinc powder, a gelling agent, and additives. Accordingly, preferably the cathode is configured as the cell's positive electrode, and the anode is configured as the cell's negative electrode.

A separator is disposed between the anode and the cathode, preferably in the form of a cup-shaped separator disposed about the interior surface of the cathode. The separator is preferably formed of a non-woven fabric that prevents migration of any solid particles in the cell. The anode is disposed with alkaline electrolyte, preferably inside the separator in the centre of the cell.

The current collector will generally be elongated so as to protrude into one of the electrodes, preferably the anode. Any suitable current collector materials and constructions may be used, as are known in the art. Preferably, the current collector is formed of brass, for example in the form of a brass nail having an elongated body and an enlarged head at one end.

Preferably, the anode, cathode and separator are configured in a bobbin-type configuration. However, the anode, cathode and separator may alternatively be configured in a spiral wound configuration, for a jelly-roll cell construction, or may be otherwise configured in primary or secondary cells, in accordance with the present invention.

The compression bushing is formed of a rigid and non-stretchable material, preferably a nonmetallic material, more preferably a polymeric material, and particularly preferably is made of polystyrene which is rigid and non-stretchable. The compression bushing is preferably formed by injection moulding. The compression bushing is formed in a generally cylindrical shape such that it is symmetric with respect to the central longitudinal axis of the cell passing through opening.

The compression bushing preferably is also symmetric, about a plane oriented perpendicular to the longitudinal axis. Since the top end of the bushing will therefore be symmetric with the bottom end, the compression bushing is then orientation insensitive. Accordingly, the compression bushing can be inserted onto the hub from either its top or bottom end. This advantageously simplifies the cell assembly process, since manufacturing equipment can easily handle and orient the compression bushing into an upright position for insertion onto the hub, without having to distinguish between top and bottom ends.

The current collector, annular seal (which is formed of a resilient material, and preferably formed of nylon), and compression bushing are preferably pre-assembled and inserted into the open end of the battery can (preferably formed of steel) as an assembled unit. Thus, the cell preferably includes a collector and seal assembly which closes the open end of the can. Included in the collector and seal assembly is the current collector, annular seal, and compression bushing. During manufacture, the compression bushing is forcefully inserted onto the hub, and thereafter the current collector is inserted, preferably downwardly from the top end, into the central opening formed in the hub of the seal.

An outer conductive cover, preferably formed of plated steel, is preferably disposed over the collector and seal assembly, and preferably forms the negative contact terminal of cell. The outer conductive cover is in electrical contact with the current collector, preferably via pressure contact or a weld. The outer cover preferably includes one or more vent openings that serve to expose the non-sealed volume of the cell to the surrounding outside atmosphere to allow for venting of gases during a cell venting condition.

The annular seal preferably has an outer peripheral upstanding wall formed at its outer perimeter, an inner upstanding wall which forms a thickened hub at the centre of the seal, and a diaphragm portion formed between the outer peripheral upstanding wall and the central hub. The hub preferably protrudes from the external surface of the seal, away from the cell contents.

Preferably, the diaphragm is concave when viewed from outside the cell. Accordingly, the diaphragm, viewed in cross-section; shows an inwardly directed curve, elbow shape or other configuration, preferably a curve or elbow shape. By providing a concave diaphragm that is curved or bent inward towards the sealed inner volume of the can, a compressive force is caused to be applied to the seal when the pressure in the sealed volume of the cell is greater than the atmospheric pressure in the non-sealed volume. When the seal is disposed in the can, the sealed volume becomes slightly pressurised and, as the cell discharges, the pressure generally increases. Since the sealed volume of the cell generally always has a pressure greater than the atmospheric pressure, the seal is generally always under compression. Advantageously, by maintaining the seal in a compressed state, the seal is less susceptible to damage when exposed to electrolyte such as KOH. Since the adverse effects caused by the KOH or other electrolyte are reduced by maintaining the seal under compression, little or no protective asphalt coating may be required.

In cross section, the seal preferably also shows an inverted V-section at the juncture of the diaphragm with the outer peripheral upstanding wall. Thus, the inverted V-section provides a raised channel between the diaphragm and outer upstanding wall for receiving the top open end of the separator, whereby the separator can fit into the inverted V-section and conform thereto.

The seal's central hub has a cylindrical opening defined vertically therethrough for receiving the current collector and providing an interference fit sealed closure between current collector and the hub. The hub has an outer cylindrical upstanding wall defining its outer perimeter. The compression bushing is force fitted around the outer upstanding wall of the hub so as to compress the hub radially inward. The compression bushing preferably completely surrounds the outer upstanding wall of the hub. In a preferred embodiment, the bushing further extends above the hub and contacts the bottom surface of an outer cover to provide a support structure that enhances the vent shear edge and supports the collector and seal orientation, as explained further below.

The seal preferably further has a thinned section formed in the diaphragm adjacent to the bottom outer peripheral edge of the compression bushing. The thinned section serves to provide a force concentration vent for venting pressure when the internal pressure in the sealed volume of the cell reaches a predetermined pressure limit. By placing the thinned section at a location adjacent to the bottom outer edge of the compression bushing, the bottom outer edge of the compression bushing serves to provide a shear edge to achieve a more consistent venting action. In addition, the compression bushing preferably has at least one vertical groove, and preferably a plurality of vertical grooves, formed in its outer upstanding peripheral wall for preventing sealing of the flexed seal diaphragm against the upstanding walls of the compression bushing during a cell venting condition. The grooves or channels are preferably circumferentially spaced around the perimeter of the outer surface of the compression bushing, and have a preferred depth of approximately 130-180 µm (5-7 mils).

The outer upstanding walls of the hub define an initial non-compressed diameter D_{H}. The outer wall diameter of the hub, when in its initial non-compressed state, is larger than the inside diameter of the central opening formed in compression bushing. In addition, the upstanding wall of the hub may have a slight taper with a smaller diameter at the top end to allow the compression bushing to more easily engage the hub.

As the compression bushing is forcefully inserted onto the outer upstanding wall of the hub, the upstanding wall of the hub is compressed radially inward. When the compression bushing is forcibly inserted onto the upstanding walls of the hub, the central opening in the hub is reduced in diameter due to the radial compression caused by the compression bushing on the hub. The outer wall diameter of the hub is also reduced in diameter.

Once the compression bushing has been force fitted onto the hub so as to reduce the size of the central opening of the hub, the current collector is then inserted into the hub opening. With the collector fully inserted, the opening is forced to expand to substantially its original, non-compressed, size. In doing so, the compression bushing provides a compressive force on the hub, so as to keep the hub in a compressive state, instead of allowing the hub to be in tension.

Accordingly, the seal hub is compressed between the compression bushing and the collector so as to exert radial compressive stress and tangential compressive stress on the seal's hub. It has been discovered that by maintaining the hub in compression, rather than under tension, the hub is less prone to stress corrosion cracking, which is particularly significant when the seal is exposed to electrolytes such as KOH. As a consequence, the amount of sealant employed between the collector and seal, and the amount of asphalt employed on the bottom of the seal can be reduced or even eliminated. It should also be appreciated that the collector and seal assembly does not employ an inner metal cover.

According to one embodiment, an electrochemical cell is provided that comprises:
a container having a closed bottom end, an open top end, and upstanding walls extending between the bottom and top ends;
electrochemically active materials disposed in the container, the electrochemically active materials including a positive electrode and a negative electrode;
a resilient and electrically non-conductive seal body having a hub with an inner upstanding wall protruding from a surface and defining an opening through the seal body;
an electrically conductive collector extending through the opening in the seal body to provide electrical continuity between the electrochemically active materials within the cell and the exterior of the cell; and
a polymeric compression bushing contacting an outer periphery of the inner upstanding wall and compressing the upstanding wall of the hub against the current. collector.

According to another embodiment, an electrochemical cell is provided that comprises:
a container having a closed bottom end, an open top end, and upstanding walls extending between the bottom and top ends;
electrochemically active materials disposed in the container, the electrochemically active materials including a positive electrode and a negative electrode;
a resilient and electrically non-conductive seal body having a hub with an inner upstanding wall protruding from a surface and defining an opening through the seal body;
an electrically conductive collector extending through the opening in the seal body to provide electrical continuity between the electrochemically active materials within the cell and the exterior of the cell; and
a compression bushing having an aperture formed therein and extending along a longitudinal axis of the cell and contacting an outer periphery of the inner upstanding wall and compressing the upstanding wall of the hub against the current collector, wherein the compression bushing is substantially symmetric about an axis perpendicular to the longitudinal axis.

The present invention will be further understood by reference to the embodiments shown in the drawings, in which:
Figure 1 is a longitudinal cross-sectional view of an electrochemical cell having a collector and seal assembly containing a compression bushing according an embodiment of the present invention;
Figure 2 is an elevated exploded view of the collector and seal assembly of Figure 1;
Figure 3 is a sectional top view of the seal prior to assembly;
Figure 4 is a sectional top view of the seal partially assembled with. the compression bushing; and
Figure 5 is a sectional top view of the seal further illustrating assembly of the collector inserted through the central opening in the seal hub.

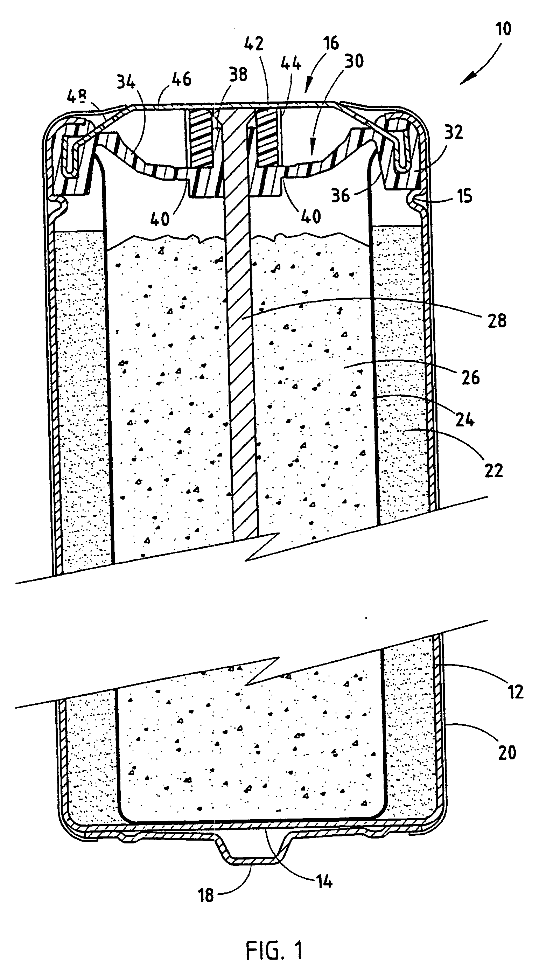

Referring to Figure 1, a cylindrical electrochemical cell 10, such as an alkaline cell according to one example, is shown therein. Electrochemical cell 10 includes a cylindrical steel can 12 having a closed bottom end 14 and an open top end 16. The closed bottom end 14 of can 12 includes a positive cover 18 welded or otherwise attached thereto and formed of plated steel, with a protruding nub at its centre region, which forms the positive contact terminal of cell 10. A metalised, plastic film, label 20 is formed about the exterior surface of steel can 12, except for the ends of steel can 12. Film label 20 may be formed over the peripheral edge of the positive cover and may extend partially onto the negative cover as shown.

A cathode 22 is formed about the interior surface of steel can 12, and is generally tubular shaped. According to one example, the cathode 22 is. formed of a mixture of manganese dioxide, graphite, potassium hydroxide (KOH) solution, and additives. A separator 24, preferably formed of a non-woven fabric, is disposed about the interior surface of cathode 22. An anode 26 is disposed with alkaline electrolyte inside the separator 24, generally in the centre of the cell 10. According to one example, the anode 26 is formed of zinc powder, a gelling agent, and additives. Disposed in contact with anode 26 is a current collector 28, for example a brass nail, having an elongated body and an enlarged head at one end. Accordingly, the cathode 22 is configured as the cell's positive electrode, and the anode 26 is configured as the cell's negative electrode.

The electrochemical cell 10 includes a collector and seal assembly which closes the open end 16 of steel can 12. Included in the collector and seal assembly is current collector 28, an annular nylon seal 30, and a polymeric compression bushing 42. The current collector 28, nylon seal 30, and polymeric compression bushing 42 are preferably pre-assembled and inserted into the open end 16 of steel can 12 as an assembled unit. In addition, an outer conductive cover 46, which forms the negative contact terminal of cell 10, is disposed over the collector and seal assembly. The outer negative cover 46, which is preferably formed of plated steel, is in contact with current collector 28, preferably via pressure contact or a weld. The outer negative cover 46 includes one or more vent openings 48.

The annular nylon seal 30 has an outer peripheral upstanding wall 32 formed at its outer perimeter, and an inner upstanding wall which forms a thickened hub 38 at the centre of seal 30. Formed between central hub 38 and outer upstanding wall 32 is an inwardly curved, i.e., concave, diaphragm 34 and an inverted V-section 36. The inverted V-section provides a raised channel between the diaphragm 34 and outer upstanding wall 32 for receiving the top open end of separator 24.. Accordingly, the separator 24 fits into the inverted V-section and conforms thereto.

The seal's central hub 38 has a. cylindrical opening defined vertically therethrough for receiving the current collector 28 and providing an interference fit sealed closure between collector nail 28 and hub 38. Formed about the outer perimeter of hub 38 is an outer cylindrical upstanding wall. The polymeric compression grommet 42 is force fitted around the outer upstanding wall of hub 38 so as to compress hub 38, radially inward. Compression grommet 42 completely surrounds the outer upstanding wall of hub 38 and further extends above hub 38 and contacts the bottom surface of outer cover 46 to provide a support structure that enhances the vent shear edge and supports the collector and seal orientation.

Seal 30 further has a thinned-section 40 formed in the diaphragm 38 adjacent to the bottom outer peripheral edge of compression bushing 42. Thinned-section 40 serves to provide a force concentration vent for venting pressure when the internal pressure in the sealed volume of the cell reaches a predetermined pressure limit. By placing the thinned-section 40 at a location adjacent to the bottom outer edge of polymeric compression bushing 42, the bottom outer edge of compression bushing 42 serves to provide a shear edge to achieve a more consistent venting action. In addition, the polymeric compression bushing 42 has vertical grooves 44 formed therein for preventing sealing of the flexed seal diaphragm 34 against the upstanding walls of compression bushing 42 during a cell venting condition.

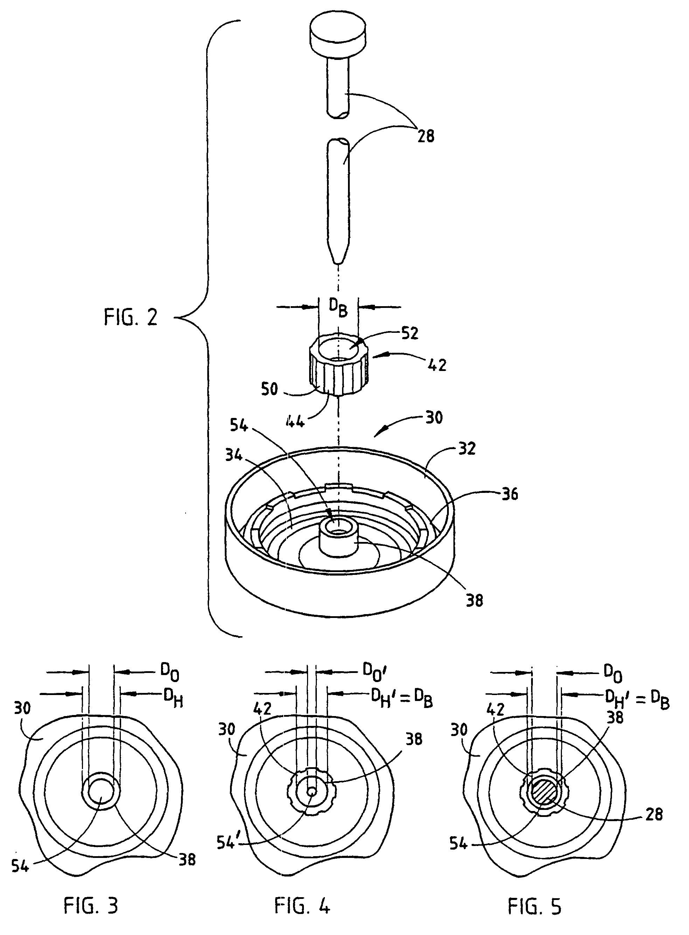

The assembly of the collector 28. seal 30, and compression bushing 42 to form the collector and seal assembly is illustrated in Figures 2-5. With particular reference to Figure 2, the polymeric compression bushing 42 has a cylindrical opening 52 formed. centrally therethrough with a diameter D_{B}. Polymeric compression bushing 42 is formed of rigid and non-stretchable material, for example polystyrene. Compression bushing 42 is formed in a generally cylindrical shape such that it is symmetric both-with respect to the central longitudinal axis of the cell passing through opening 52 and a plane oriented perpendicular to the longitudinal axis.

Compression bushing 42 has an outer peripheral wall 50 with a plurality of vertical channels 44 formed in its outer upstanding wall. Channels 44 are circumferentially spaced around the perimeter of the outer surface of compression bushing 42. The compression bushing 42 is orientation insensitive, since the top end is symmetric with the bottom end, and accordingly can be inserted onto hub 38 from either its top or bottom end. During manufacture, the polymeric compression bushing 42 is forcefully inserted onto hub 38, and thereafter the current collector 28 is inserted downwardly from the top end into the central opening 54 formed in hub 38 of seal 30.

With particular reference to Figure 3, the nylon seal 30 is shown prior to assembly of the collector and seal assembly. The central opening 54 formed in the seal's hub 38 has an initial non-compressed inside diameter Do. The outer upstanding walls of hub 38 define an initial non-compressed diameter D_{H}. The outer wall diameter D_{H} of hub 38 is larger than the inside diameter D_{B} of the central opening 52 formed in compression bushing 42. In addition, the upstanding wall of hub 38 may have a slight taper with a smaller diameter at the top end to allow compression bushing 42 to more easily engage hub 38.

As the compression bushing 42 is forcefully inserted onto the outer upstanding wall of hub 38, the upstanding wall of hub 38 is compressed radially inward as is shown in Figure 4. When the polymeric compression bushing 42 is forcibly inserted onto the upstanding walls of hub 38, the central opening 54' is reduced to a reduced diameter Dₒ' due to the radial compression caused by compression bushing 42 on hub 38. Also, the outer wall diameter D_{H} of hub 38 is also reduced to a diameter of D_{H}'.

Once the compression bushing 42 has been force fitted onto hub 38 so as to reduce the size of opening 54', the current collector nail 28 is then inserted into . opening 54 as shown in Figure 5. With the collector nail 28 fully inserted, the size of opening 54' is forced to expand to substantially its original size 54. In doing so, compression bushing 42 provides a compressive force on hub 38, so as to keep the hub 38 in a compressive state, instead of allowing the hub 38 to be in tension. Accordingly, the seal hub 38 is compressed between polymeric compression bushing 42 and collector 28 so as to exert radial compressive stress and tangential compressive stress on the seal's hub 38.

## Claims

1. A current collector (28) and seal (30) assembly for sealing electrochemically active components within a container, the assembly comprising:
a resilient and electrically non-conductive seal body having a hub (38) with an inner upstanding wall defining an opening therethrough;
a current collector (28) inserted through the opening (52) and adapted to contact electrochemically active components in an electrochemical cell (10); and
a compression bushing (42) having an aperture formed through a central longitudinal axis and contacting an outer periphery of the inner upstanding wall of the hub (38) and compressing the upstanding wall of the hub (38) against the current collector, **characterized in that** the compression bushing (42) is substantially symmetric about an axis perpendicular to the longitudinal axis.

2. An assembly according to claim 1, wherein the compression bushing (42) comprises a polymeric material.

3. An assembly according to claim 2, wherein the compression bushing (42) comprises polystyrene.

4. An assembly according to claim 2 or claim 3, wherein the compression bushing (42) is injection moulded.

5. An assembly according to any preceding claim, wherein the compression bushing (42) is ring shaped.

6. An assembly according to any preceding claim, wherein the current collector (28) and the compression bushing (42) cooperate to exert radial compressive stress and tangential compressive stress on the inner upstanding wall of the hub (38) of the seal (30) after the current collector (28) is inserted through the opening (52).

7. An assembly according to any preceding claim, wherein the seal (30) further comprises an outer upstanding wall formed at the perimeter of the seal (30) and a diaphragm (34) interconnected between the inner upstanding wall and outer upstanding wall.

8. An assembly according to claim 7, further comprising a stress concentration section formed in the diaphragm (34) in a region adjacent to an outer perimeter of the bushing.

9. An assembly according to claim 7 or claim 8, wherein the diaphragm (34) has a concave bottom surface which causes the diaphragm (34) to be compressed when an elevated pressure exists in the container.

10. An assembly according to claim 9, wherein the concave bottom surface of the diaphragm (34) has an elbow shape.

11. An assembly according to any of claims 7 to 10, wherein the seal (30) has an inverted V-shape section located between the diaphragm (34) and the outer upstanding wall (32) for receiving an end of a separator (24).

12. An assembly according to any preceding claim, wherein the compression bushing (42) comprises an upstanding wall having at least one vertical passage to prevent sealing of the seal (30) against the wall of the compression bushing (42) during a vent condition.

13. An assembly according to claim 14, wherein the at least one vertical passage comprises a plurality of grooves found in the upstanding wall of the compression bushing (42).

14. An assembly according to any preceding claim, wherein the seal (30) is not radially supported by a radial support member.

15. An electrochemical cell (10) comprising a current collector (28) and seal (30) assembly according to any preceding claim.

16. A cell (10) according to claim 15 further comprising a terminal cover in contact with the current collector (28)

17. A cell according to claim 16 comprising an alkaline electrolyte including potassium hydroxide.

18. A process for assembling an electrochemical cell (10) comprising the steps of:
providing a container (12) having a closed bottom end (14), an open top end (16), and upstanding walls between the top and bottom ends;
disposing electrochemically active materials including a positive electrode (22) and a negative electrode (26) in the container (12);
providing a seal body having an inner upstanding wall defining an opening (52) having a first diameter provided therein;
assembling a compression bushing (42) around an outer periphery of the inner upstanding wall of the seal (30) and under compression so as to compress the upstanding wall to reduce the size of the opening (52) to a second diameter, wherein the compression bushing (42) has an aperture extending through a longitudinal axis of the cell and the compression bushing is substantially symmetric about an axis perpendicular to the longitudinal axis;
disposing a current collector (28) through the opening (52) formed in the upstanding wall so that the current collector (28) causes the opening (52) to increase in size from the second diameter to approximately the first diameter, thereby preventing the presence of tensile forces on the upstanding wall of the seal; and
assembling the seal (30) and collector (28) assembly in the open end (16) of the container (12) to close and seal the container (42).

## Patentansprüche

1. Stromkollektor (28)- und Abdichtungs (30)-Anordnung zum Verschließen elektrochemisch aktiver Komponenten in einem Behälter, wobei die Anordnung Folgendes umfasst:
einen elastischen und elektrisch nicht leitfähigen Abdichtungskörper, der eine Nabe (38) mit einer aufragenden Innenwand aufweist, durch die eine Öffnung ausgebildet ist,
einen Stromkollektor (28), der durch die Öffnung (52) eingefügt wird und befähigt ist, mit elektrochemisch aktiven Komponenten in der elektrochemischen Zelle (10) in Kontakt zu treten, und
eine Kompressionsbuchse (42) mit einer Öffnung, die durch die zentrale Längsachse ausgebildet ist und mit dem Außenrand der aufragenden Innenwand der Nabe (38) in Kontakt steht und die aufragende Innenwand der Nabe (38) gegen den Stromkollektor drückt, **dadurch gekennzeichnet, dass** die Kompressionsbuchse (42) um eine Achse senkrecht zur Längsachse herum im Wesentlichen symmetrisch angeordnet ist.

2. Anordnung gemäß Anspruch 1, wobei die Kompressionsbuchse (42) ein polymeres Material umfasst.

3. Anordnung gemäß Anspruch 2, wobei die Kompressionsbuchse (42) Polystyrol umfasst.

4. Anordnung gemäß den Ansprüchen 2 oder 3, wobei die Kompressionsbuchse (42) spritzgegossen wird.

5. Anordnung gemäß irgendeinem der vorhergehenden Ansprüche, wobei die Kompressionsbuchse (42) ringförmig ist.

6. Anordnung gemäß irgendeinem der vorhergehenden Ansprüche, wobei der Stromkollektor (28) und die Kompressionsbuchse (42) zusammenarbeiten, um eine radiale Druckspannung und eine tangentiale Druckspannung auf die aufragende Innenwand der Nabe (38) der Abdichtung (30) auszuüben, nachdem der Stromkollektor (28) durch die Öffnung (52) eingeführt wurde.

7. Anordnung gemäß irgendeinem der vorhergehenden Ansprüche, wobei die Abdichtung (30) weiterhin eine aufragende Außenwand, die an der äußeren Begrenzung der Abdichtung (30) ausgebildet ist, und ein Diaphragma (34) umfasst, das die aufragende Innenwand und die aufragende Außenwand verbindet.

8. Anordnung gemäß Anspruch 7, die weiterhin einen Spannungskonzentrationsbereich umfasst, der in dem Diaphragma (34) in einem Bereich benachbart zur äußeren Begrenzung der Buchse ausgebildet ist.

9. Anordnung gemäß den Ansprüchen 7 oder 8, wobei das Diaphragma (34) eine konkave untere Fläche aufweist, die bewirkt, dass das Diaphragma (34) zusammengedrückt wird, wenn ein erhöhter Druck im Behälter existiert.

10. Anordnung gemäß Anspruch 9, wobei die konkave untere Fläche des Diaphragmas (34) eine Ellenhogenform hat.

11. Anordnung gemäß irgendeinem der Ansprüche 7 bis 10, wobei die Abdichtung (30) einen Bereich in Form eines umgekehrten V hat, der zwischen dem Diaphragma (34) und der aufragenden Außenwand (32) lokalisiert ist, um ein Ende eines Separators (24) aufzunehmen.

12. Anordnung gemäß irgendeinem der vorhergehenden Ansprüche, wobei die Kompressionsbuchse (42) eine aufragende Wand umfasst, die wenigstens einen vertikalen Durchgang hat, um ein Verschließen der Abdichtung (30) gegen die Wand der Kompressionsbuchse (42) während eines Belüftungszustandes zu verhindern.

13. Anordnung gemäß Anspruch 14, wobei wenigstens ein vertikaler Durchgang eine Mehrzahl von Rillen umfasst, die in der aufragenden Wand der Kompressionsbuchse (42) vorgefunden werden.

14. Anordnung gemäß irgendeinem der vorhergehenden Ansprüche, wobei die Abdichtung (30) nicht durch ein radiales Trägerteil radial gestützt wird.

15. Elektrochemische Zelle (10), umfassend eine Stromkollektor (28)- und Abdichtungs (30)-Anordnung gemäß irgendeinem der vorhergehenden Ansprüche.

16. Zelle (10) gemäß Anspruch 15, die weiterhin eine Endabdeckung im Kontakt mit dem Stromkollektor (28) umfasst.

17. Zelle (10) gemäß Anspruch 16, die einen alkalischen Elektrolyten umfasst, der Kaliumhydroxid einschließt.

18. Verfahren zum Zusammenbauen einer elektrochemischen Zelle (10), das die folgenden Schritte umfasst:
das Bereitstellen eines Behälters (12), der ein geschlossenes unteres Ende (14), ein offenes oberes Ende (16) und aufragende Wände zwischen dem oberen Ende und dem unteren Ende aufweist,
das Anordnen von elektrochemisch aktiven Materialien, einschließlich einer positiven Elektrode (22) und einer negativen Elektrode (26), in dem Behälter (12),
das Bereitstellen eines Abdichtungskörpers, der eine aufragende Innenwand aufweist, in der eine Öffnung (52) ausgebildet ist, die einen ersten darin bereitgestellten Durchmesser aufweist,
das Anordnen einer Kompressionsbuchse (42) um den Außenumfang der aufragenden Innenwand der Abdichtung (30) herum und unter Zusammendrücken, um so die aufragende Wand zusammenzudrücken, um die Größe der Öffnung (52) auf einen zweiten Durchmesser zu reduzieren, wobei die Kompressionsbuchse (42) eine Öffnung hat, die sich durch die Längsachse der Zelle erstreckt, und die Kompressionsbuchse um eine Achse senkrecht zur Längsachse im Wesentlichen symmetrisch angeordnet ist,
das Einführen eines Stromkollektors (28) durch die Öffnung (52), die in der aufragenden Wand ausgebitdet ist, so dass der Stromkollektor (28) eine Zunahme der Größe der Öffnung (52) bewirkt, und zwar vom zweiten Durchmesser auf etwa den ersten Durchmesser, wodurch das Vorliegen von Zugkräften in der aufrechten Wand der Abdichtung verhindert wird, und
das Anordnen der Abdichtung (30)- und Stromkollektor (28)-Anordnung in dem offenen Ende (16) des Behälters (16), um den Behälter (42) zu verschließen und abzudichten.

## Revendications

1. Dispositif à un collecteur de courant (28) et joint d'étanchéité (30) pour étancher électrochimiquement des composants actifs dans un conteneur, l'ensemble comprenant :
un corps d'étanchéité élastique et électriquement non conducteur ayant un moyeu (38) avec une paroi verticale intérieure y définissant une ouverture,
un collecteur de courant (28) inséré dans l'ouverture (52) et adapté pour mettre en contact des composants électrochimiquement actifs dans une cellule électroclhimique (10), et
une douille de compression (42) ayant un jour formé le long d'un axe longitudinal central et entrant en contact avec une périphérie extérieure de la paroi verticale intérieure du moyeu (38) et compressant la paroi verticale du moyeu (38) contre le collecteur de courant, **caractérisé en ce que** la douille de compression (42) est sensiblement symétrique par rapport à un axe perpendiculaire à l'axe longitudinal.

2. Dispositif selon la revendication 1, dans lequel la douille de compression (42) est constituée d'un matériau polymère.

3. Dispositif selon la revendication 2, dans lequel la douille de compression (42) est constituée de polystyrène.

4. Dispositif selon la revendication 2 ou la revendication 3, dans lequel la douille de compression (42) est moulée par injection.

5. Dispositif selon une revendication précédente quelconque, dans lequel la douille de compression (42) est en forme d'anneau.

6. Dispositif selon une revendication précédente quelconque, dans lequel le collecteur de courant (28) et la douille de compression (42) coopèrent pour exercer une contrainte compressive radiale et une contrainte compressive tangentielle sur la paroi verticale intérieure du moyeu (38) du joint d'étanchéité (30) après que le collecteur de courant (28) a été inséré par l'ouverture (52).

7. Dispositif selon une revendication précédente quelconque, dans lequel le joint d'étanchéité (30) comprend en outre une paroi verticale extérieure formée au niveau du périmètre du joint d'étanchéité (30) et un diaphragme (34) interconnecté entre la paroi verticale intérieure et la paroi verticale extérieure.

8. Dispositif selon la revendication 7, comprenant en outre une section de concentration de contrainte formée dans le diaphragme (34) dans une région adjacente au périmètre extérieur de la douille.

9. Dispositif selon la revendication 7 ou la revendication 8, dans lequel le diaphragme (34) a une surface de fond concave qui amène le diaphragme (34) à être comprimé quand une pression élevée existe dans le conteneur.

10. Dispositif selon la revendication 9, dans lequel la surface de fond concave du diaphragme (34) a une forme de coude.

11. Dispositif selon une quelconque des revendications 7 à 10, dans lequel le joint d'étanchéité (30) a une section en forme de V renversé située entre le diaphragme (34) et la paroi verticale extérieure (32) pour recevoir une extrémité d'un séparateur (24).

12. Dispositif selon une quelconque des revendications précédentes, dans lequel la douille de compression (42) comprend une paroi verticale ayant au moins un passage vertical pour empêcher le scellement du joint d'étanchéité (30) contre la paroi de la douille de compression (42) pendant une situation de décharge.

13. Dispositif selon la revendication 12, dans lequel ledit au moins un passage vertical comprend une pluralité de rainures se trouvant sur la paroi verticale de la douille de compression (42).

14. Dispositif selon une quelconque des revendications précédentes, dans lequel le joint d'étanchéité (30) n'est pas supporté radialement par un membre de support radial.

15. Cellule électrochimique (10) comprenant un collecteur de courant (28) et un joint d'étanchéité (30) selon une revendication précédente quelconque.

16. Cellule (10) selon la revendication 15 comprenant en outre un recouvrement terminal en contact avec le collecteur de courant (28).

17. Cellule selon la revendication 16 comprenant un électrolyte alcalin incluant de l'hydroxyde de potassium.

18. Procédé pour assembler une cellule électrochimique comprenant les étapes consistant à :
prévoir un conteneur (12) ayant une extrémité inférieure fermée (14), une extrémité supérieure ouverte (16) et des parois verticales entre les extrémités inférieure et supérieure,
disposer des matériaux électrochimiquement actifs y compris une électrode positive (22) et une électrode négative (26) dans le conteneur,
prévoir un corps d'étanchéité ayant une paroi verticale intérieure définissant une ouverture (52) ayant un premier diamètre prévue dans celui-ci,
monter une douille de compression (42) autour d'une périphérie extérieure de la paroi verticale intérieure du joint d'étanchéité (30) et sous compression de manière à comprimer la paroi verticale afin de réduire la taille de l'ouverture (52) à un deuxième diamètre, dans lequel la douille de compression (42) a un jour s'étendant le long d'un axe longitudinal de la cellule et la douille de compression est sensiblement symétrique par rapport à un axe perpendiculaire à l'axe longitudinal,
disposer un collecteur de courant par l'ouverture (52) formée par la paroi verticale de telle manière que le collecteur de courant amène l'ouverture (52) à augmenter de taille et à passer du deuxième diamètre approximativement au premier diamètre, empêchant ainsi la présence de forces de traction sur la paroi du joint d'étanchéité, et
monter le dispositif à joint d'étanchéité (30) et collecteur (28) dans l'extrémité ouverte (16) du conteneur (12) pour fermer et rendre étanche le conteneur (12).
